# EUROPEAN PATENT SPECIFICATION

(11) **EP 0 707 736 B1**
(45) Date of publication and mention of the grant of the patent: **14.06.2000**
(21) Application number: 94920545.4
(22) Date of filing: 11.07.1994
(51) Int. Cl.: G09B 21/00, G05D 23/19

(54) **CONTROL APPARATUS WITH AUDIBLE DISPLAY**
STEUERUNGSVORRICHTUNG MIT HORBARER ANZEIGE
APPAREIL DE COMMANDE A AFFICHAGE SONORE

(30) Priority: 09.07.1993 GB 9314187
(43) Date of publication of application: 24.04.1996
(73) Proprietor: Honeywell Control Systems Ltd., Bracknell, Berkshire (GB)
(72) Inventor: MACKIE, Alastair, D., Motherwell ML1 5SF (GB); GRAHAM, Matthew, Glasgow G69 6LG (GB); SKEA, Kenneth, J., Glasgow G76 7DP (GB)
(74) Representative: Fox-Male, Nicholas Vincent Humbert
(86) International application number: GB9401502
(87) International publication number: WO9502232

(56) References cited:
- FR-A- 2 652 933
- GB-A- 2 094 503
- US-A- 4 000 565
- US-A- 4 014 016
- US-A- 4 576 178
- US-A- 4 768 926
- PATENT ABSTRACTS OF JAPAN vol. 13, no. 164 (E-745) 19 April 1989 & JP,A,63 316 596 (NEC CORP) 23 December 1988
- PATENT ABSTRACTS OF JAPAN vol. 11, no. 62 (P-551) 25 February 1987 & JP,A,61 226 825 (TOSHIBA CORP) 8 October 1986

## Description

The present invention relates to a temperature and/or humidity control system.

Audible information signals or messages are commonly used in heating systems or other domestic equipment. For example, in one form of domestic heating system controller having a touch key-pad of buttons to make adjustments to the programmed values, the controller emits one burst of sound of a predetermined frequency each time a button is depressed to acknowledge that the instruction or value has been input.

British Patent Specification No. 2094503A describes a control unit for a central heating system having an audible signaling device to produce a tone whenever the manual controls are operated and/or when a pre-set time or temperature is reached.

In GB Patent Specification No. 2252846A, there is disclosed a central heating and hot water control system in the operation of which an audible warning is used to indicate when a HIGH temperature value has been reached.

The present invention provides a temperature and/or humidity control system as defined by Claim 1 hereinafter.

The present invention may embody any one or more of the features as set out in dependent Claims 2 to 11 hereinafter.

Thus, the invention can provide a low-cost way (e.g. without the use of a voice-synthesizer chip) whereby a person utilising the apparatus receives an audible signal concerning the instruction, this being particularly valuable to a visually-impaired person for whom it may be difficult or impossible to read a visual display or setting. Also, the invention can provide substantial information in a given sequence effectively and efficiently.

A substantially mono-frequency sound may comprise a tone or sound with a fundamental frequency (sine wave) and harmonics resulting from the non-sinusoidal waveshape generated by a microprocessor (normally close to square) and the frequency response characteristic of a transducer (e.g. piezo-electric sounder or similar).

The sequences of sounds may have a variety of lengths of various mono-frequencies and the separation between sounds may vary or may have substantially no separation between them. Other musical characteristics of notes may also be utilised.

In order to economise on the number of mono-frequencies required, not every sequential sound in a substantially increasing (or decreasing) sequence needs to exceed (or be less than) the previous one, e.g. there may be, in a sequence two successive sounds of the same mono-frequency.

Two or more substantially mono-frequency sounds in a sequence may have substantially no separation between them, thus the sequence appears to the normal human ear to be continuous; in an alternative, two or more such sounds may overlap so that the sequence is continuous.

The button means may be any appropriate arrangement whereby a user can input physically data or instructions into the apparatus, for example one or more buttons or keys, a keyboard, a touch pad or screen.

The button means and the sound emitting means may be remote from a control unit and/or the temperature or humidity system.

A sequence of sounds may be of substantially progressively increasing frequency and/or a sequence may be of substantially progressively decreasing frequency. In order to economise on the number of mono-frequencies required, not every sequential sound in a substantially increasing (or decreasing) sequence needs to exceed (or be less than) the previous one, e.g. there may be, in a sequence two successive sounds of the same mono-frequency.

Two or more substantially mono-frequency sounds in a sequence may have substantially no separation between them, thus the sequence appears to the normal human ear to be continuous; in an alternative, two or more such sounds may overlap so that the sequence is continuous.

The button means may be any appropriate arrangement whereby a user can input physically data or instructions into the apparatus, for example one or more buttons or keys, a keyboard, a touch pad or screen.

In order that the invention may more readily be understood, a description is now given, by way of example only, reference being made to the accompanying drawings, in which:-
Figure 1a is a block diagram of one embodiment of the present invention;
Figure 1b is a block diagram of another embodiment of the invention;
Figures 2a, 2b and 2c are timing diagrams of example sequences for the Setpoint Increase and Decrease buttons;
Figure 3 is a timing diagram of an example burst for the Setpoint Preset button;
Figure 4a is a timing diagram of an example sequence for the Setpoint Inquiry button indicating the setpoint is equal to the present value;
Figure 4b is a timing diagram of an example sequence for the Setpoint Inquiry button indicating that the setpoint is more than the preset value; and
Figure 4c is a timing diagram of an example sequence for the Setpoint Inquiry button indicating that the setpoint is less than the preset value.

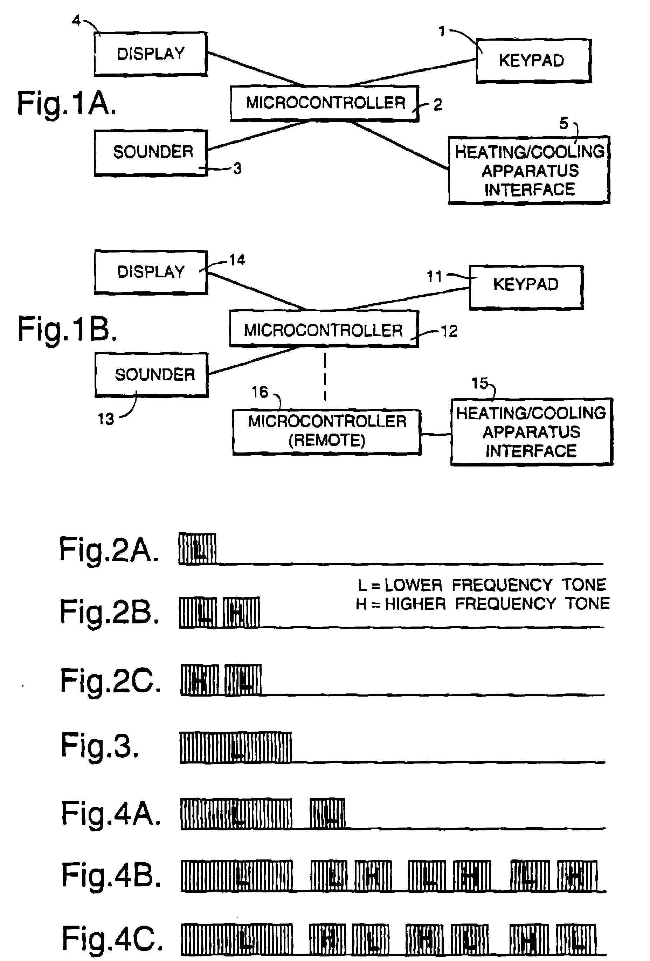

Figure 1a shows a temperature controller with facilities to assist the visually-impaired in adjusting the room temperature setpoint. The buttons used for adjusting the setpoint have tactile identification to facilitate location of the button. Distinct audible tones or tone sequences confirm the action taken when the button is pressed and provide feedback of the setpoint value.

The controller consists of:
a) a keypad (1)
b) a microcontroller (2)
c) a sounder (3)
d) a display (4)
e) an interface to heating/cooling apparatus (5).

The microcontroller 2 performs the user interface functions and performs the temperature control functions; in an alternative shown in Figure 1b, the microcontroller 12 is connected to another microcontroller unit 16 which performs some or all of the temperature control functions.

There are four buttons used for adjusting the setpoint, arranged in a group on the keypad 1 or 11; the buttons being
1) the Setpoint Increase button,
2) the Setpoint Decrease button,
3) the Setpoint Preset button,
4) the Setpoint Inquiry button

The buttons have easily identified embossed patterns to identify their function, examples of these being an "up" arrow for Increase, a "down" arrow for Decrease, a "square" for Preset and a "circle" for Inquiry.

The display 4 or 14 shows a temperature value which is either the current room temperature or the current setpoint value. In normal operation, the room temperature is displayed but when any of the four buttons listed are pressed, the value changes to the current setpoint, reverting to room temperature 10 seconds after the last button press.

The four buttons operate in the following way:-

### 1. Setpoint Increase and Decrease buttons:

On the first press of either the Setpoint Increase or Decrease button the microcontroller 2 or 12 sends instructions for a single short tone burst to the sounder 3 or 13 and the current setpoint is displayed but not altered. Figure 2a shows a timing diagram of an example sequence.

On subsequent presses of one of these buttons, the following as appropriate occurs:-
Setpoint Increase button - On each press the microcontroller sends instructions for a sequence of two tone bursts to the sounder 3 or 13, the frequency of the second tone being greater than the first tone. The setpoint increases by 0.5 on each press of the button, the new value being displayed. Figure 2b shows a timing diagram of an example sequence.
Setpoint Decrease button - On each press the microcontroller sends instructions for a sequence of two tone bursts to the sounder 3 or 13, the frequency of the second tone being less than the first tone. The setpoint decreases by 0.5 degree on each press of the button, the new value being displayed. Figure 2c shows a timing diagram of an example sequence.

In a second alternative arrangement, on the first press of either the Setpoint Increase or Decrease button, the microcontroller 2 or 12 sends instructions for a sequence equivalent to a Setpoint Inquiry button press rather than a single short tone burst. In this way, the visually-impaired user is made aware of the setpoint just as the sighted person is via the display.

In a third arrangement, on the first press of either the Setpoint Increase or Decrease button, the mircocontroller 2 or 12 operates in the same way as if the Setpoint Preset button had been pressed, setting the setpoint to the Preset value. A variant of this arrangement eliminates the Setpoint Preset Button as its function is performed by the Increase or Decrease Button.

In a fourth arrangement, with the Setpoint Increase and Decrease button operating as in the previous-arrangement, the Setpoint Preset button is used by the visually-impaired person to alter the Preset value. This is done by pressing the Setpoint Preset button after the current setpoint has been altered to the desired preset value using the Setpoint Increase or Setpoint Decrease buttons. When the Setpoint Preset button is pressed, the Preset value becomes the current setpoint value and the microcontroller 2 or 12 sends to the sounder instructions for a single tone burst of a duration longer than the single tone bursts or the Increase/Decrease sequences. Thereafter, any Increase/Decrease operations are relative to the new Preset Value and the number of tone burst sequences emitted in a Setpoint enquiry relate to this temperature. This arrangement has the advantage of offering greater flexibility to the visually-impaired user but implies the need to remember the Preset value. In this mode of operation the Preset value is operating more as a Reference value.

A fifth alternative arrangement uses the Setpoint Increase and Decrease buttons operating as in the first or second arrangement and uses a separate button with the function of the Preset Button in the fourth arrangement. This combines the advantages of all the above schemes, but complicates the operation a little for the visually-impaired user.

### 2. Setpoint Preset button:

When this is pressed the setpoint is set to a value which has been preset in the controller, for example, 20°C. The microcontroller 2 or 12 sends to the sounder instructions for a single tone burst of a duration longer than the single tone bursts or the Increase/Decrease sequences. The setpoint is set to the Preset value and this value is displayed. The controller 2 or 12 has means to alter this Preset value which is normally a value fixed at installation time and altered very infrequently as it would have to be remembered by the visually-impaired user. Figure 3 shows a time diagram of an example burst.

### 3. Setpoint Inquiry button:

If the setpoint is equal to the preset value, the microcontroller 2 or 12 sends instructions for a long tone burst (of the same length as the Preset button tone burst) followed by a single short tone burst. Figure 4a shows a time diagram of an example sequence.

If the setpoint is greater than the present value, the microcontroller 2 or 12 sends instructions for a long tone burst followed by a series of tone burst sequences, each one the same as the Increase Setpoint sequence. The number of sequences would represent the number of 0.5 degrees above the Preset value. For example, if the setpoint is 21.5°C and the preset value is 20°C the sounder 3 and 13 emits the long burst followed by three "Increase" burst sequences . Figure 4b shows a timing diagram of an example sequence.

If the setpoint is less than the preset value, the microcontroller 2 and 12 sends instructions for a long tone burst followed by a series of tone burst sequence each one the same as the Decrease Setpoint sequence. The number of sequences would represent the number of 0.5 degrees below the Preset value. For example, if the setpoint is 18.5°C and the preset value is 20°C, the sounder 3 and 13 would emit the long burst followed by three "Decrease" burst sequences. Figure 4c shows a timing diagram of an example sequence.

The described arrangement provides a low-cost way of providing complex and detailed information in compact sequences which are readily-understandable. It avoids the need of a costly voice synthesizer chip and associated electronics.

The described arrangement can be modified to satisfy particular circumstances, for example the increments can be in which degrees rather than half-degrees, or a sequence of tone bursts indicating a setpoint change can consist of more than two tones of differing frequency.

Clearly, some of the sequences need not rely on differing frequencies, for example in one situation the sequences may all have tones of the same frequency, but differing in length, and/or the number of sounds, and/or their time separation. In a particularly simple form, a Setpoint Increase sequence may be a single long tone and the Setpoint Decrease sequence may be a single short tone. Such arrangements are particularly suited to accommodate people who have difficulty in distinguishing between sounds of different frequency.

## Claims

1. A temperature and/or humidity control system, comprising apparatus for inputting instructions comprising at least one button means (1) to input instructions to the control system, characterised by means (3) to emit a plurality of different substantially mono-frequency sounds and means (2,3) to output one of a plurality of predetermined sequences of two or more said sounds in accordance with the instructions inputted.

2. A system according to Claim 1 characterised in that the sequences of sounds have a variety of meanings, some corresponding to an indication of the present setting and/or an indication of a change being/to be made, and/or some responding to the instructions input by answering a question posed by the instructions input.

3. A system according to Claim 1 or 2 characterised in that the sequences of sounds have a variety of lengths of various mono-frequencies and/or have a variety of length of separation between sounds.

4. A system according to any preceding Claim characterised in that a sequence of sounds is of substantially progressively increasing frequency.

5. A system according to any preceding Claim characterised in that a sequence of sounds is of substantially progressively decreasing frequency.

6. A system according to any preceding Claim characterised in that two or more substantially mono-frequency sounds in a sequence have substantially no separation between them.

7. A system according to any preceding Claim characterised in that the button means (1) comprises one or more buttons, or a key-board, or a touch pad or screen.

8. A system according to any preceding claim characterised in that the button means (11) and the sound emitting means (13) are remote from a control unit (16).

9. A system according to any preceding Claim, characterised in that at least one button means comprises a button means to set the setpoint to a value which has been preset.

10. A system according to Claim 9, characterised by a microcontroller to send instructions to a sounder for a sequence indicating that the set point is equal to the preset value.

11. A system according to Claim 9 or 10, characterised by a microcontroller to send instructions for a number of sequences representing the number of specified increments between the set point and the preset.

## Patentansprüche

1. Temperatur- und/oder Feuchtigkeitssteuerungssystem, mit einer Vorrichtung zum Eingeben von Befehlen, welche wenigstens eine Tasteneinrichtung (1) aufweist, um Befehle in das Steuerungssystem einzugeben, **gekennzeichnet durch** eine Einrichtung (3), um eine Mehrzahl von unterschiedlichen, im wesentlichen monofrequenten Tönen auszugeben, und eine Einrichtung (2, 3), um eine von einer Mehrzahl von vorbestimmten Sequenzen von zwei oder mehreren der genannten Töne gemäß den eingegebenen Befehlen auszugeben.

2. System nach Anspruch 1, **dadurch gekennzeichnet**, dass die Tonsequenzen verschiedene Bedeutungen haben, wobei einige einer Angabe der aktuellen Einstellung und/oder einer Angabe einer durchgeführten oder durchzuführenden Änderung entsprechen, und/oder einige auf die Befehlseingabe durch Beantworten einer Frage antworten, die durch die Befehlseingabe gestellt wird.

3. System nach Anspruch 1 oder 2, **dadurch gekennzeichnet**, dass die Tonsequenzen eine Anzahl von Längen von verschiedenen Monofrequenzen und/oder eine Anzahl von Längen von Trennungen zwischen den Tönen haben.

4. System nach einem der vorhergehenden Ansprüche, **dadurch gekennzeichnet**, dass eine Tonsequenz aus einer im wesentlichen progressiv ansteigenden Frequenz besteht.

5. System nach einem der vorhergehenden Ansprüche, **dadurch gekennzeichnet**, dass eine Tonsequenz aus einer im wesentlichen progressiv abfallenden Frequenz besteht.

6. System nach einem der vorhergehenden Ansprüche, **dadurch gekennzeichnet**, dass zwei oder mehrere im wesentlichen monofrequente Töne in einer Sequenz zwischen sich im wesentlichen keine Trennung haben.

7. System nach einem der vorhergehenden Ansprüche, **dadurch gekennzeichnet**, dass die Tasteneinrichtung (1) eine oder mehrere Tasten, eine Tastatur, Kontakttastatur oder einen Kontaktbildschirm umfasst.

8. System nach einem der vorhergehenden Ansprüche, **dadurch gekennzeichnet**, dass die Tasteneinrichtung (11) und die Tonausgabeeinrichtung (13) von einer Steuerungseinheit (16) entfernt angeordnet sind.

9. System nach einem der vorhergehenden Ansprüche, **dadurch gekennzeichnet**, dass wenigstens eine Tasteneinrichtung eine Tasteneinrichtung umfasst, um den Einstellwert (set-point) auf einen Wert einzustellen, der voreingestellt worden ist.

10. System nach Anspruch 9, **gekennzeichnet durch** einen Mikrokontroller, um Befehle zu einem Töner für eine Sequenz zu senden, die angibt, dass der Einstellwert gleich dem voreingestellten Wert ist.

11. System nach Anspruch 9 oder 10, **gekennzeichnet durch** einen Mikrokontroller, um Befehle für eine Anzahl von Sequenzen zu senden, welche die Anzahl von spezifizierten Inkrementen zwischen dem Einstellwert und dem voreingestellten Wert repräsentieren.

## Revendications

1. Système de contrôle de température et/ou d'humidité, comprenant un appareil pour entrer des instructions comportant au moins un moyen de bouton (1) pour entrer des instructions dans le système de contrôle, caractérisé par un moyen (3) pour émettre une pluralité de sons différents sensiblement monofréquentiels et un moyen (2, 3) pour émettre une parmi une pluralité de séquences prédéfinies de deux sons ou plus en fonction des instructions entrées.

2. Système selon la revendication 1, caractérisé en ce que les séquences de sons ont différentes significations, certains correspondant à une indication du paramétrage courant et/ou une indication d'une modification étant/devant être apportée, et/ou certaines réagissant aux instructions entrées en réponse à une question posée par les instructions entrées.

3. Système selon la revendication 1 ou 2, caractérisé en ce que les séquences de sons ont différentes longueurs, différentes monofréquences et/ou présentent différentes durées de séparation entre les sons.

4. Système selon l'une quelconque des revendications précédentes, caractérisé en ce qu'une séquence de sons est de fréquence sensiblement croissante.

5. Système selon l'une quelconque des revendications précédentes, caractérisé en ce qu'une séquence de sons est de fréquence sensiblement décroissante.

6. Système selon l'une quelconque des revendications précédentes, caractérisé en ce que deux sons sensiblement monofréquentiels ou plus dans une séquence n'ont pratiquement pas de séparation entre eux.

7. Système selon l'une quelconque des revendications précédentes, caractérisé en ce que le moyen de bouton (1) comprend un ou plusieurs boutons, ou un clavier, ou un bloc tactile ou un écran.

8. Système selon l'une quelconque des revendications précédentes, caractérisé en ce que le moyen de bouton (11) et le moyen d'émission de son (13) sont distants d'une unité de contrôle (16).

9. Système selon l'une quelconque des revendications précédentes, caractérisé en ce qu'au moins un moyen de bouton comprend un moyen de bouton pour régler le point de réglage à une valeur qui a été prédéfinie.

10. Système selon la revendication 9, caractérisé par un microcontrôleur destiné à envoyer des instructions à un émetteur sonore pour une séquence indiquant que le point de réglage est égal à la valeur prédéfinie.

11. Système selon la revendication 9 ou 10, caractérisé par un microcontrôleur destiné à envoyer des instructions pour un nombre de séquences correspondant au nombre d'incréments spécifiés entre le point de réglage et la valeur prédéfinie.
